# EUROPÄISCHE PATENTANMELDUNG

(11) **EP 4 509 937 A1**
(43) Veröffentlichungstag der Anmeldung: **19.02.2025**
(21) Anmeldenummer: 24192490.1
(22) Anmeldetag: 02.08.2024
(51) Int. Cl.: G05B 19/418

(54) **VERPACKUNGSKORREKTURSYSTEM, VERPACKUNGSMASCHINE ODER VERFAHREN ZUM AUTOMATISIERTEN AUSGEBEN EINES KORREKTURSIGNALS AN EINE BEARBEITUNGSEINHEIT**

(30) Priorität: 09.08.2023 DE 102023121204
(71) Anmelder: MULTIVAC Sepp Haggenmüller SE & Co. KG, 87787 Wolfertschwenden (DE)
(72) Erfinder: BLOCHUM, Sebastian, 87600 Kaufbeuren (DE)
(74) Vertreter: Grünecker Patent- und Rechtsanwälte PartG mbB

(57) **Zusammenfassung**

Die Erfindung bezieht sich auf ein Verpackungskorrektursystem (30) für eine Verpackungsmaschine (1) zum automatisierten Ausgeben eines Korrektursignals (70) an eine Bearbeitungseinheit (2) der Verpackungsmaschine (1), eine Verpackungsmaschine (1), die ein Verpackungskorrektursystem (30) umfasst oder ein Verfahren zum automatisierten Ausgeben eines Korrektursignals (70) an eine Bearbeitungseinheit (2), insbesondere einer Verpackungsmaschine (1). Das Verpackungskorrektursystem (30) umfasst zumindest einen ersten Sensor (31) zum Erfassen von einer ersten Kontur (51) von zumindest einer ersten Verpackung (41), eine Modellierungseinheit (32) zum Bestimmen von ersten Modellparametern (51') eines ersten Modells (51") der ersten Kontur (51) und eine Vergleichseinheit (33) zum Bestimmen einer ersten Abweichung (A₁) der ersten Modellparameter (51') von vorgegebenen Referenzparametern (53').Das Verpackungskorrektursystem (30) umfasst ferner eine Korrektursignaleinheit (34) zum Erzeugen des Korrektursignals (70) für die Bearbeitungseinheit (2) und eine Ausgabeeinheit (35) zum Ausgeben des Korrektursignals (70) an die Bearbeitungseinheit (2).

## Beschreibung

Die vorliegende Erfindung bezieht sich auf ein Verpackungskorrektursystem für eine Verpackungsmaschine zum automatisierten Ausgeben eines Korrektursignals an eine Bearbeitungseinheit der Verpackungsmaschine , eine Verpackungsmaschine, die ein Verpackungskorrektursystem umfasst oder ein Verfahren zum automatisierten Ausgeben eines Korrektursignals an eine Bearbeitungseinheit, insbesondere einer Verpackungsmaschine.

### Stand der Technik

Aus dem Stand der Technik sind Maschinen, beispielsweise Tiefziehverpackungsmaschinen, bekannt, um aus einer Folie eine Verpackung herzustellen. Eine Tiefziehverpackungsmaschine geht beispielsweise aus DE 10 2015 211 622 A1 hervor. Solche Verpackungsmaschinen zeichnen sich durch eine Formstation zum Tiefziehen von Mulden in eine Verpackungsfolie aus und umfassen üblicherweise eine Siegelstation zum Versiegeln der tiefgezogenen Mulden mit einer Deckelfolie sowie eine Station zum Vereinzeln der erzeugten Verpackungen. Die Mulden werden üblicherweise nebeneinander in der Verpackungsfolie gebildet und die Verpackungen vereinzelt indem die Verpackungs- und die Deckelfolie in Längs- und Querrichtung durchtrennt werden.

Der Nachteil des Stands der Technik besteht darin, dass die Trennbereiche der Verpackungen beispielsweise infolge einer falschen Maschineneinstellung oder abgenutzter Werkzeuge fehlerhaft ausgebildet sein können. Verbleiben zum Beispiel überschüssige Folienreste der Verpackungs- oder Deckelfolie an den Verpackungen oder sind die Trennkanten schief, kann dies eine Qualität und Ästhetik der hergestellten Verpackungen nachteilig beeinflussen.

### Aufgabe

Ausgehend von dem bekannten Stand der Technik besteht die zu lösende technische Aufgabe darin, ein Verpackungskorrektursystem für eine Verpackungsmaschine zum automatisierten Ausgeben eines Korrektursignals an eine Bearbeitungseinheit der Verpackungsmaschine, eine Verpackungsmaschine, die ein Verpackungskorrektursystem umfasst oder ein Verfahren zum automatisierten Ausgeben eines Korrektursignals an eine Bearbeitungseinheit, insbesondere einer Verpackungsmaschine, anzugeben, die ein einfaches und genaues Herstellen von Verpackungen ermöglichen.

### Lösung

Diese Aufgabe wird erfindungsgemäß durch ein Verpackungskorrektursystem für eine Verpackungsmaschine zum automatisierten Ausgeben eines Korrektursignals an eine Bearbeitungseinheit der Verpackungsmaschine gemäß dem Anspruch 1, eine Verpackungsmaschine, die ein Verpackungskorrektursystem umfasst gemäß dem Anspruch 8 oder ein Verfahren zum automatisierten Ausgeben eines Korrektursignals an eine Bearbeitungseinheit, insbesondere einer Verpackungsmaschine, gemäß dem Anspruch 9 gelöst.

Vorteilhafte Weiterbildungen der Erfindung sind in den Unteransprüchen erfasst.

Es wird ein Verpackungskorrektursystem für eine Verpackungsmaschine zum automatisierten Ausgeben eines Korrektursignals an eine Bearbeitungseinheit der Verpackungsmaschine offenbart. Das Verpackungskorrektursystem umfasst zumindest einen ersten Sensor zum Erfassen von einer ersten Kontur von zumindest einer ersten Verpackung. Das Verpackungskorrektursystem umfasst ferner eine Modellierungseinheit zum Bestimmen von ersten Modellparametern eines ersten Modells der ersten Kontur. Das Verpackungskorrektursystem umfasst ferner eine Vergleichseinheit zum Bestimmen einer ersten Abweichung der ersten Modellparameter von vorgegebenen Referenzparametern. Das Verpackungskorrektursystem umfasst ferner eine Korrektursignaleinheit zum Erzeugen des Korrektursignals für die Bearbeitungseinheit. Das Verpackungskorrektursystem umfasst ferner eine Ausgabeeinheit zum Ausgeben des Korrektursignals an die Bearbeitungseinheit. Dies ermöglicht ein einfaches und genaues Herstellen von Verpackungen. Insbesondere können fehlerhaft ausgebildete Konturen der Verpackungen oder zumindest Bereiche davon, beispielsweise aufgrund von überschüssigen Folienresten an den Verpackungen oder schiefen Konturen, nahezu vermieden werden. Es können qualitativ hochwertige und ästhetische Verpackungen hergestellt werden. Im Idealfall wird eine Effizienz der Verpackungsmaschine erhöht und optional ein Ausschuss an fehlerhaft hergestellten Verpackungen reduziert.

Unter der ersten und einer nachfolgend beschriebenen zweiten Verpackung kann jeder beliebige Körper verstanden werden, der zur Aufnahme von zumindest einem Produkt geeignet ist. Die Verpackung kann ein Kartonelement und/oder eine Verpackungsfolie (aus Kunststoff und/oder mit Papieranteil) und optional eine Deckelfolie aufweisen. Insbesondere kann die Verpackung einen Produktaufnahmebereich, vorzugsweise eine Mulde, aufweisen, der zur Aufnahme von einem Produkt geeignet ist. Optional kann die Verpackung zumindest nahezu flach ausgebildet sein. Die Verpackung kann einen um den Produktaufnahmebereich zumindest abschnittsweise angeordneten Rand aufweisen, an dem vorzugsweise kein Produkt angeordnet ist. Der Rand kann mit einer Deckelfolie gesiegelt sein um die Verpackung zu verschließen. Die Verpackung kann eine von der Bearbeitungseinheit vorbestimmte Verpackungslänge, -breite und -höhe aufweisen, die die erste und/oder eine nachfolgend beschriebene zweite Kontur bildet.

Die erste bzw. die zweite Kontur kann einen oder mehrere Fehler an zumindest einem Bereich der ersten bzw. zweiten Kontur aufweisen. Der Bereich kann einen oder mehrere Abschnitte oder die gesamte Kontur umfassen. Grundsätzlich kann ein Fehler jeder Unterschied der ersten Kontur zu einer Referenzkontur sein, der insbesondere die Qualität und/oder Ästhetik der Verpackung nachteilig beeinflussen kann. Der Fehler kann beispielsweise eine in Bezug auf die Referenzkontur unsauberere, schiefe oder falsch platzierte oder orientierte Kante oder ein überschüssiger Folienrest an der Verpackung, insbesondere der Verpackungsfolie und optional der Deckelfolie sein.

Die erste Kontur und insbesondere der oder die Fehler der ersten Kontur der hergestellten ersten Verpackung kann mit einer ersten Bildaufnahme des ersten Sensors dargestellt sein. Der erste Sensor kann beispielsweise ein Ultraschallsensor, ein kapazitiver Sensor und/oder ein optischer Sensor, zum Beispiel eine Kamera oder eine Lichtschranke, sein. Die Kamera kann eine 2D- oder eine 3D-Kamera sein. Denkbar wäre auch eine 1D-(Zeilen-)Kamera. Der erste Sensor kann parallel oder winklig zur ersten Kontur angeordnet sein, um die erste Bildaufnahme der ersten Kontur aufzunehmen. Beispielsweise kann die erste Bildaufnahme parallel zu einer Oberseite der ersten Verpackung sein, insbesondere einer ersten Ebene, die von der Verpackungslänge, und -breite aufgespannt wird. Optional kann die erste Bildaufnahme parallel zu einer Längsseite der ersten Verpackung sein, insbesondere einer zweiten Ebene, die von der Verpackungslänge, und -höhe oder parallel zu einer Querseite der ersten Verpackung, insbesondere einer dritten Ebene, die von der Verpackungsbreite, und -höhe aufgespannt wird. Optional kann die erste Bildaufnahme winklig zu der ersten, zweiten und/oder dritten Ebene sein. Optional kann der erste Sensor gleichzeitig mehrere erste Verpackungen bzw. deren erste Konturen erfassen bzw. kann die erste Bildaufnahme gleichzeitig erste Konturen von mehreren ersten Verpackungen darstellen.

Die erste Bildaufnahme bzw. die erfasste erste Kontur kann an die Modellierungseinheit weitergeleitet werden. Die Modellierungseinheit kann die erste Bildaufnahme, vorzugsweise austomatisiert, verarbeiten, um die ersten Modellparameter der ersten Kontur zu bestimmen. Mittels der ersten Modellparameter kann auf einfache Weise ein erstes Modell der ersten Kontur erstellt werden.

Die ersten Modellparameter können an die Vergleichseinheit weitergeleitet werden, um die ersten Modellparameter mit den Referenzparametern zu vergleichen und die erste Abweichung zu bestimmen. Die erste Abweichung kann angeben, wie stark sich die erste Kontur von der Referenzkontur unterscheidet. Die erste Abweichung kann mehrere erste Teilabweichungen umfassen. Beispielsweise kann, wenn die erste Kontur mehrere Fehler aufweist, die erste Abweichung eine der Fehleranzahl entsprechende Anzahl an ersten Teilabweichungen umfassen. Die erste Teilabweichung kann angeben, wie stark sich der jeweilige fehlerhafte Bereich der ersten Kontur, der durch die ersten Modellparameter dargestellt wird, von der durch die Referenzparameter dargestellten Referenzkontur unterscheidet. Beispielsweise kann die erste Abweichung bzw. die ersten Teilabweichungen angeben, wie stark zumindest eine Kante der ersten Kontur oder mehrere Bereiche davon in Bezug auf die Referenzkontur in axialer Richtung versetzt ist. Optional oder zusätzlich kann die erste Abweichung bzw. die ersten Teilabweichungen angeben, wie stark die zumindest eine Kante der ersten Kontur in Bezug auf die Referenzkontur in Rotationsrichtung verdreht ist.

Die Referenzparameter können ein Referenzmodell der Referenzkontur von einer Referenzverpackung beschreiben. Insbesondere können die Referenzparameter eine Referenzverpackungslänge, -breite und -höhe umfassen, die die Referenzkontur bilden. Die Referenzkontur kann eine ideale Kontur einer herzustellenden Verpackung beschreiben. Die Vergleichseinheit kann eine Speichereinheit aufweisen oder auf eine von der Vergleichseinheit extern ausgebildete Speichereinheit zugreifen, auf der die vorgegebenen Referenzparameter gespeichert sind. Die Vergleichseinheit kann die erste Abweichung oder optional die ersten Teilabweichungen mit einem vorgegebenen ersten Schwellenwert vergleichen. Der erste Schwellenwert kann angeben, wie stark sich die ersten Modellparameter von den Referenzparametern höchstens unterscheiden dürfen, damit die hergestellte erste Kontur den Qualitätsanforderungen entspricht und keine Korrektur, d.h. kein Korrektursignal für die Bearbeitungseinheit, erforderlich ist. Der erste Schwellenwert kann beliebig gewählt sein. Beispielsweise kann der erste Schwellenwert angeben, dass zumindest eine Kante der ersten Kontur oder mehrere Bereiche davon in Bezug auf die Referenzkontur höchstens um etwa fünf Millimeter, vorzugsweise um höchstens etwa drei Millimeter, in axialer Richtung versetzt sein darf. Optional oder zusätzlich kann der erste Schwellenwert angeben, dass die zumindest eine Kante der ersten Kontur in Bezug auf die Referenzkontur höchstens um etwa drei Grad, vorzugsweise um höchstens zwei Grad, in Rotationsrichtung verdreht sein darf. Dadurch kann bestimmt werden, ob die erste Kontur Fehler, wie beispielsweise schiefe, unsaubere (überschüssige Folienreste), falsch platzierte und/oder falsch orientierte Kanten aufweist. Die ersten Modellparameter können hinreichend gut gewählt sein, d.h. die erste Kontur kann hinreichend gut gefertigt sein, und es kann keine Korrektur, d.h. kein Korrektursignal für die Bearbeitungseinheit, erforderlich sein, wenn die erste Abweichung oder optional die ersten Teilabweichungen kleiner als der erste Schwellenwert oder gleich dem ersten Schwellenwert sind. Ist die erste Abweichung oder optional die ersten Teilabweichungen größer als der erste Schwellenwert, kann die Vergleichseinheit bestimmen, dass die hergestellte erste Kontur nicht den Qualitätsanforderungen entspricht, d.h. dass sie zu stark von der Referenzkontur abweicht und eine Korrektur erforderlich ist.

Die erste Abweichung oder optional die ersten Teilabweichungen können an die Korrektursignaleinheit zum Erzeugen des Korrektursignals für die Bearbeitungseinheit weitergeleitet werden. Das Korrektursignal kann so bestimmt sein, dass die von der Bearbeitungseinheit zu erzeugende zweite Kontur der zweiten Verpackung (zumindest annähernd) der Referenzkontur entspricht. Das Korrektursignal kann beispielsweise eine Position und/oder einen Druck und/oder eine Geschwindigkeit der Bearbeitungseinheit, insbesondere in Bezug auf die zu fertigende Verpackung, angeben.

Das Korrektursignal kann an die Ausgabeeinheit zum Ausgeben des Korrektursignals an die Bearbeitungseinheit weitergeleitet werden. Die Bearbeitungseinheit kann basierend auf dem Korrektursignal (automatisch oder manuell) gesteuert werden, um die zweite Verpackung, insbesondere deren zweite Kontur, herzustellen. Die Ausgabeeinheit kann das Korrektursignal direkt an eine Aktorik, insbesondere deren Antrieb, der Bearbeitungseinheit oder optional an eine Steuerung der Bearbeitungseinheit ausgeben, die mit der Aktorik der Bearbeitungseinheit kommunikativ verbunden ist.

Die Bearbeitungseinheit kann eine Schneidvorrichtung und/oder Stanzvorrichtung umfassen. Die Bearbeitungseinheit kann dazu ausgebildet sein die Verpackungen in Längs- und/oder Querrichtung zu durchtrennen. Beispielsweise kann die Bearbeitungseinheit eine Stanzvorrichtung aufweisen, die die Verpackungen quer zu einer Produktionsrichtung zwischen benachbarten Mulden oder Rändern durchtrennt. Die Bearbeitungseinheit kann ferner eine Schneidvorrichtung in Form einer Messeranordnung mit mehreren rotierenden Rundmessern aufweisen, mit der die Verpackungen zwischen benachbarten Mulden oder Rändern der Verpackungen in Produktionsrichtung durchtrennt werden.

Die Einheiten des Verpackungskorrektursystems, insbesondere der erste Sensor und optional ein zweiter Sensor, die Modellierungseinheit, die Vergleichseinheit, die Korrektursignaleinheit und/oder die Ausgabeeinheit, können miteinander drahtlos oder mit einem Kabel kommunikativ verbunden sein. Das Verpackungskorrektursystem oder zumindest eine oder mehrere Einheiten davon kann in eine Steuerung der Verpackungsmaschine integriert oder separat ausgebildet und mit dieser kommunikativ verbunden sein.

Vorzugsweise ist die Modellierungseinheit zum Bestimmen von zweiten Modellparametern eines zweiten Modells einer zweiten Kontur von zumindest einer zweiten Verpackung basierend auf der ersten Abweichung ausgebildet, wobei die Vergleichseinheit zum Bestimmen einer zweiten Abweichung der zweiten Modellparameter von den Referenzparametern ausgebildet ist, und wobei die Korrektursignaleinheit zum Erzeugen des Korrektursignals für die Bearbeitungseinheit der Verpackungsmaschine basierend auf den bestimmten zweiten Modellparametern ausgebildet ist, wenn die zweite Abweichung kleiner als ein vorgegebener zweiter Schwellenwert oder gleich einem vorgegebenen zweiten Schwellenwert ist. Dies kann die Genauigkeit des Verfahrens verbessern.

Die erste Abweichung oder optional die ersten Teilabweichungen können an die Modellierungseinheit zum Bestimmen der zweiten Modellparameter des zweiten Modells der zweiten Kontur der zweiten Verpackung weitergeleitet werden. Optional oder zusätzlich können die ersten Modellparameter und/oder die Referenzparameter an die Modellierungseinheit weitergeleitet werden. Mittels der zweiten Modellparameter kann auf einfache Weise ein zweites Modell der zweiten Kontur der zweiten Verpackung erstellt werden. Die zweiten Modellparameter können sich von den ersten Modellparametern und/oder den Referenzparametern unterscheiden. Im Idealfall können die zweiten Modellparameter, insbesondere basierend auf der ersten Abweichung, derart gewählt sein, dass sich die zweite Kontur im Vergleich zu der ersten Kontur nicht unzulässig stark, im Idealfall nicht mehr, von der Referenzkontur unterscheidet, sodass sie keine(n) Fehler mehr aufweist.

Die zweiten Modellparameter können an die Vergleichseinheit zum Bestimmen der zweiten Abweichung der zweiten Modellparameter von den Referenzparametern weitergeleitet werden. Die zweite Abweichung kann angeben, wie stark sich die zweite Kontur von der Referenzkontur unterscheidet. Die zweite Abweichung kann mehrere zweite Teilabweichungen umfassen. Beispielsweise kann, wenn die zweite Kontur mehrere Fehler aufweist, die zweite Abweichung eine der Fehleranzahl entsprechende Anzahl an zweiten Teilabweichungen umfassen. Die zweite Teilabweichung kann angeben, wie stark sich der jeweilige fehlerhafte Bereich der zweiten Kontur, der durch die zweiten Modellparameter dargestellt wird, von der durch die Referenzparameter dargestellten Referenzkontur unterscheidet. Mit anderen Worten können die zweite Abweichung oder optional die zweiten Teilabweichungen angeben, wie gut die zweiten Modellparameter gewählt sind, damit die zweite Kontur (zumindest annähernd) der Referenzkontur entspricht. Beispielsweise kann die zweite Abweichung bzw. die zweiten Teilabweichungen angeben, wie stark zumindest eine Kante der zweiten Kontur oder mehrere Bereiche davon in Bezug auf die Referenzkontur in axialer Richtung versetzt ist. Optional oder zusätzlich kann die zweite Abweichung bzw. die zweiten Teilabweichungen angeben, wie stark die zumindest eine Kante der zweiten Kontur in Bezug auf die Referenzkontur in Rotationsrichtung verdreht ist.

Die Vergleichseinheit kann die zweite Abweichung oder optional die zweiten Teilabweichungen mit dem vorgegebenen zweiten Schwellenwert vergleichen. Der zweite Schwellenwert kann angeben, wie stark sich die zweiten Modellparameter von den Referenzparametern höchstens unterscheiden dürfen, damit die herzustellende zweite Kontur den Qualitätsanforderungen entspricht und keine Korrektur, d.h. kein Korrektursignal für die Bearbeitungseinheit, erforderlich ist. Der zweite Schwellenwert kann beliebig gewählt sein. Der zweite Schwellenwert kann dem ersten Schwellenwert entsprechen. Beispielsweise kann der zweite Schwellenwert angeben, dass zumindest eine Kante der zweiten Kontur oder mehrere Bereiche davon in Bezug auf die Referenzkontur höchstens um etwa fünf Millimeter, vorzugsweise um höchstens etwa drei Millimeter, in axialer Richtung versetzt sein darf. Optional oder zusätzlich kann der zweite Schwellenwert angeben, dass die zumindest eine Kante der zweiten Kontur in Bezug auf die Referenzkontur höchstens um etwa drei Grad, vorzugsweise um höchstens zwei Grad, in Rotationsrichtung verdreht sein darf. Dadurch kann bestimmt werden, ob die zweite Kontur Fehler, wie beispielsweise schiefe, unsaubere (überschüssige Folienreste), falsch platzierte und/oder falsch orientierte Kanten aufweist. Die zweiten Modellparameter können hinreichend gut gewählt sein, d.h. die zweite Kontur kann hinreichend gut herstellbar sein, und es kann keine Korrektur, d.h. kein Korrektursignal für die Bearbeitungseinheit erforderlich sein, wenn die zweite Abweichung oder optional die zweiten Teilabweichungen kleiner als der zweite Schwellenwert oder gleich dem zweiten Schwellenwert sind. Sind die zweite Abweichung oder optional die zweiten Teilabweichungen größer als der zweite Schwellenwert, kann die Vergleichseinheit bestimmen, dass die herzustellende zweite Kontur nicht den Qualitätsanforderungen entspricht, d.h. dass sie zu stark von der Referenzkontur abweicht und eine Korrektur erforderlich ist.

Wenn die zweite Abweichung oder optional die zweiten Teilabweichungen kleiner als der zweite Schwellenwert oder gleich dem zweiten Schwellenwert sind, können die zweiten Modellparameter an die Korrektursignaleinheit zum Erzeugen des Korrektursignals weitergeleitet werden. In dem Fall, dass die zweite Abweichung oder optional die zweiten Teilabweichungen größer als der zweite Schwellenwert sind, können die zweiten Modellparameter nicht an die Korrektursignaleinheit weitergeleitet werden. Insbesondere können in diesem Fall die Schritte der Bestimmung der zweiten Modellparameter, der Bestimmung der zweiten Abweichung bzw. optional der zweiten Teilabweichungen und des Vergleichs der zweiten Abweichung bzw. optional der zweiten Teilabweichungen mit dem zweiten Schwellenwert iterativ durchgeführt werden, insbesondere so oft, bis die zweite Abweichung bzw. die zweiten Teilabweichungen kleiner als der zweite Schwellenwert oder gleich dem zweiten Schwellenwert sind. Dies kann ein einfaches und besonders genaues Herstellen von Verpackungen ermöglichen.

Vorzugsweise beschreiben die ersten Modellparameter ein zweidimensionales erstes Modell der ersten Kontur, die zweiten Modellparameter ein zweidimensionales zweites Modell der zweiten Kontur und/oder die vorgegebenen Referenzparameter ein zweidimensionales Referenzmodell von einer Referenzkontur von einer Referenzverpackung. Mittels einer zweidimensionalen Modellierung ist es möglich, die erste, zweite und/oder Referenzkontur besonders einfach zu modellieren. Indem ein zweidimensionales erstes Modell der ersten Kontur erstellt wird, kann ein erster Sensor, insbesondere 2D-Kamera, ausreichend sein, um eine erste Bildaufnahme der ersten Kontur zu machen. Optional kann ein Aufwand für die Modellierung reduziert werden.

Vorzugsweise weist das Verpackungskorrektursystem zumindest einen zweiten Sensor auf, wobei der erste Sensor und der zweite Sensor in einem Winkel zueinander angeordnet sind. Dies ermöglicht eine, insbesondere in Hinblick auf die Verwendung von nur einem ersten Sensor, besonders genaue Erfassung der ersten Kontur und insbesondere des oder der Fehler der ersten Kontur der hergestellten ersten Verpackung. Der zweite Sensor kann beispielsweise ein Ultraschallsensor, ein kapazitiver Sensor oder ein optischer Sensor, zum Beispiel eine Kamera oder eine Lichtschranke, sein oder umfassen. Die Kamera kann eine 1D-, 2D- oder eine 3D-Kamera sein oder umfassen. Der zweite Sensor kann parallel oder winklig zur ersten Kontur angeordnet sein, um eine zweite Bildaufnahme der ersten Kontur aufzunehmen. Beispielsweise kann die zweite Bildaufnahme parallel zu der Oberseite der ersten Verpackung sein, insbesondere der ersten Ebene, die von der Verpackungslänge, und -breite aufgespannt wird. Optional kann die zweite Bildaufnahme parallel zu der Längsseite der ersten Verpackung sein, insbesondere der zweiten Ebene, die von der Verpackungslänge, und -höhe oder parallel zu der Querseite der ersten Verpackung, insbesondere der dritten Ebene, die von der Verpackungsbreite, und -höhe aufgespannt wird. Optional kann die zweite Bildaufnahme winklig zu der ersten, zweiten und/oder dritten Ebene sein. Optional kann der zweite Sensor gleichzeitig mehrere erste Verpackungen bzw. deren erste Konturen erfassen bzw. kann die zweite Bildaufnahme gleichzeitig erste Konturen von mehreren ersten Verpackungen darstellen. Der Winkel zwischen dem ersten Sensor und dem zweiten Sensor, insbesondere zwischen der ersten Bildaufnahme und der zweiten Bildaufnahme, kann größer als 0° sein. Beispielsweise können der erste Sensor und der zweite Sensor, insbesondere die erste Bildaufnahme und die zweite Bildaufnahme, orthogonal zueinander angeordnet sein. Die zweite Bildaufnahme kann an die Modellierungseinheit weitergeleitet werden. Die Modellierungseinheit kann die erste und zweite Bildaufnahme gemeinsam, vorzugsweise austomatisiert, verarbeiten, um die ersten Modellparameter der ersten Kontur zu bestimmen. Indem die ersten Modellparameter auf der ersten und zweiten Bildaufnahme basiert, kann eine Genauigkeit des ersten Modells der ersten Kontur verbessert werden.

Vorzugsweise beschreiben die ersten Modellparameter ein dreidimensionales erstes Modell der ersten Kontur, die zweiten Modellparameter ein dreidimensionales zweites Modell der zweiten Kontur und/oder die vorgegebenen Referenzparameter ein dreidimensionales Referenzmodell von einer Referenzkontur von einer Referenzverpackung. Dadurch ist es möglich, die erste, zweite und/oder Referenzkontur dreidimensional und optional besonders genau zu modellieren.

Vorzugsweise ist die Vergleichseinheit zum Vergleichen des Korrektursignals mit einem vorgegebenen Toleranzbereich ausgebildet. Dadurch kann eine Zuverlässigkeit und optional eine Langlebigkeit des Verpackungskorrektursystems erhöht werden. Der Toleranzbereich kann beispielsweise mindestens etwa 10% und/oder höchstens etwa 98 %, vorzugsweise höchstens etwa 95 %, einer Obergrenze eines zulässigen Betriebsbereichs der Bearbeitungseinheit betragen. Liegt das Korrektursignal in dem Toleranzbereich kann die Ausgabeeinheit das Korrektursignal an die Bearbeitungseinheit ausgeben. Durch den Vergleich des Korrektursignals mit dem Toleranzbereich kann sichergestellt werden, dass die Bearbeitungseinheit nicht aufgrund eines unzulässigen, d.h. außerhalb des Toleranzbereichs liegenden, Korrektursignals in einem unzulässigen Betriebsbereich betrieben wird.

Vorzugsweise ist die Korrektursignaleinheit zum Ausgeben einer Fehlermeldung ausgebildet, wenn das Korrektursignal außerhalb des Toleranzbereichs liegt, wobei insbesondere die Ausgabeeinheit dazu ausgebildet ist, das Korrektursignal nicht auszugeben, wenn die Fehlermeldung ausgegeben wird. Dies kann die Zuverlässigkeit und optional Langlebigkeit des Verpackungskorrektursystems erhöhen. Dadurch kann sichergestellt werden, dass die Bearbeitungseinheit nicht aufgrund eines unzulässigen, d.h. außerhalb des Toleranzbereichs liegenden, Korrektursignals in einem unzulässigen Betriebsbereich betrieben wird. Durch die Fehlermeldung kann ein Bediener des Verpackungskorrektursystems oder der Verpackungsmaschine frühzeitig darauf hingewiesen werden, dass das Korrektursignal außerhalb des Toleranzbereichs liegt. Der Bediener kann das Korrektursignal überprüfen und gegebenenfalls geeignete Maßnahmen, beispielsweise ein Stoppen der Verpackungsmaschine, ergreifen. Optional kann das Verpackungskorrektursystem beim Ausgeben der Fehlmeldung automatisch eine geeignete Maßnahme, beispielsweise ein Stoppen der Verpackungsmaschine, ergreifen. Die Fehlermeldung kann visuell und/oder akustisch von der Korrektursignaleinheit ausgegeben werden. Die Korrektursignaleinheit kann in eine Anzeigevorrichtung der Verpackungsmaschine integriert oder separat ausgebildet und mit dieser kommunikativ verbunden sein, um die Fehlermeldung über die Anzeigevorrichtung auszugeben.

Die Erfindung betrifft ferner eine Verpackungsmaschine, insbesondere Tiefziehverpackungsmaschine. Die Verpackungsmaschine umfasst eine Bearbeitungseinheit zum Erstellen von einer ersten Kontur von zumindest einer ersten Verpackung und ein Verpackungskorrektursystem zum automatisierten Ausgeben eines Korrektursignals an die Bearbeitungseinheit(. Die Bearbeitungseinheit umfasst eine Schneidvorrichtung und/oder Stanzvorrichtung. Das Verpackungskorrektursystem ist zum Ausgeben des Korrektursignals an die Bearbeitungseinheit zum Erstellen von einer zweiten Kontur von zumindest einer zweiten Verpackung ausgebildet. Es ergeben sich dieselben vorteilhaften Effekte wie bei dem oben beschriebenen Verpackungskorrektursystem. Mittels der Verpackungsmaschine wird ein einfaches und genaues Herstellen von Verpackungen ermöglicht. Insbesondere können fehlerhaft ausgebildete Konturen der Verpackungen, beispielsweise aufgrund von überschüssigen Folienresten an den Verpackungen oder schiefen Konturen, nahezu vermieden werden. Im Idealfall kann eine Effizienz der Verpackungsmaschine erhöht und optional ein Ausschuss an fehlerhaft hergestellten Verpackungen reduziert werden. Im Idealfall kann die Qualität und/oder Ästhetik der herzustellenden Verpackungen verbessert werden.

Die Verpackungsmaschine kann eine Formstation, vorzugsweise eine Tiefziehstation, aufweisen, in der die Verpackungen durch Formen, insbesondere Tiefziehen, von Mulden in eine Folienbahn, insbesondere eine Verpackungsfolie, geformt werden. Es können in einer Richtung senkrecht zu einer Produktionsrichtung der Verpackungsmaschine mehrere Mulden nebeneinander in der Folienbahn gebildet sein. Somit können mehrere zusammenhängende Verpackungen erzeugt werden.

In Produktionsrichtung hinter der Formstation kann eine Einlegestrecke zum Befüllen der in der Folienbahn geformten Mulden mit zumindest einem Produkt sein.

Die Verpackungsmaschine kann ferner eine Siegelstation zum Sigeln einer Deckelfolie an die Folienbahn, insbesondere einen Rand der Verpackung, umfassen. Die gesiegelten Verpackungen, d.h. die Folienbahn, insbesondere die Verpackungsfolie, und die Deckelfolie, können mittels der Bearbeitungseinheit vereinzelt werden. Es können je zwei benachbarte Mulden in einer Längs- und/oder Querrichtung geschnitten und/oder gestanzt werden. Es können synchron mehrere Verpackungen vereinzelt werden. Die Schneidvorrichtung kann eine Messeranordnung mit einem oder mehreren rotierenden Rundmessern umfassen, mit der die Folienbahn und die Deckelfolie zwischen benachbarten Mulden und an einem Rand der Folienbahn durchtrennt werden können. Indem die gesiegelten Verpackungen vereinzelt werden, kann die erste Kontur der ersten Verpackung hergestellt werden.

Die Verpackungsmaschine kann ferner eine Abfuhreinrichtung, insbesondere in Form eines Transportbandes, umfassen, mit der fertige, vereinzelte Verpackungen von der Verpackungsmaschine abtransportiert werden können.

Die Verpackungsmaschine kann ferner über eine Steuerung verfügen. Diese kann die in der Verpackungsmaschine ablaufenden Prozesse steuern und überwachen.

Eine Anzeigevorrichtung, insbesondere mit Bedienelementen, kann zum Visualisieren und/oder manuellen Beeinflussen der Prozessabläufe in der Verpackungsmaschine für bzw. durch einen Bediener vorgesehen sein. Optional kann eine Fehlermeldung des Verpackungskorrektursystems über die Anzeigevorrichtung ausgegeben werden. Das Verpackungskorrektursystem oder zumindest eine oder mehrere Einheiten davon kann in eine Steuerung der Verpackungsmaschine integriert oder separat ausgebildet und mit dieser kommunikativ verbunden sein.

Die Erfindung betrifft ferner ein Verfahren zum automatisierten Ausgeben eines Korrektursignals an eine Bearbeitungseinheit, insbesondere einer Verpackungsmaschine. Das Verfahren umfasst die folgenden Schritte: Erfassen von einer ersten Kontur von zumindest einer ersten Verpackung mittels zumindest eines ersten Sensors, Bestimmen von ersten Modellparametern eines ersten Modells der ersten Kontur mittels einer Modellierungseinheit, Bestimmen einer ersten Abweichung der ersten Modellparameter von vorgegebenen Referenzparametern mittels einer Vergleichseinheit, Erzeugen des Korrektursignals für die Bearbeitungseinheit und Ausgeben des Korrektursignals mittels einer Ausgabeeinheit an die Bearbeitungseinheit. Es ergeben sich dieselben vorteilhaften Effekte wie bei dem oben beschriebenen Verpackungskorrektursystem oder der oben beschriebenen Verpackungsmaschine. Mit dem Verfahren ist es möglich Verpackungen einfach und genau herzustellen. Insbesondere können fehlerhaft ausgebildete Konturen der Verpackungen, beispielsweise aufgrund von überschüssigen Folienresten an den Verpackungen oder schiefen oder falsch platzierten Konturen, nahezu vermieden werden. Optional kann ein Ausschuss an fehlerhaft hergestellten Verpackungen reduziert werden. Im Idealfall kann die Qualität und/oder Ästhetik der Verpackungen verbessert werden.

Vorzugsweise umfasst das Verfahren die Schritte: Bestimmen von zweiten Modellparametern eines zweiten Modells einer zweiten Kontur von zumindest einer zweiten Verpackung basierend auf der ersten Abweichung mittels der Modellierungseinheit, Bestimmen einer zweiten Abweichung der zweiten Modellparameter von den Referenzparametern mittels der Vergleichseinheit, und Erzeugen eines Korrektursignals für die Bearbeitungseinheit basierend auf den bestimmten zweiten Modellparametern mittels der Korrektursignaleinheit, wenn die zweite Abweichung kleiner als ein vorgegebener zweiter Schwellenwert oder gleich einem zweiten Schwellenwert ist. Dies kann die Genauigkeit des Verfahrens verbessern.

Vorzugsweise beschreiben die ersten Modellparameter ein zweidimensionales erstes Modell der ersten Kontur, die zweiten Modellparameter ein zweidimensionales zweites Modell der zweiten Kontur und/oder die vorgegebenen Referenzparameter ein zweidimensionales Referenzmodell von einer Referenzkontur von einer Referenzverpackung. Mittels einer zweidimensionalen Modellierung ist es möglich, die erste, zweite und/oder Referenzkontur besonders einfach zu modellieren. Indem ein zweidimensionales erstes Modell der ersten Kontur erstellt wird, kann ein erster Sensor, insbesondere eine 2D-Kamera, ausreichend sein, um eine zweidimensionale Bildaufnahme der ersten Kontur zu machen. Optional kann ein Aufwand für die Modellierung reduziert werden.

Vorzugsweise ist zumindest ein zweiter Sensor vorgesehen, wobei der erste Sensor und der zweite Sensor in einem Winkel zueinander angeordnet sind. Dies ermöglicht eine, insbesondere in Hinblick auf die Verwendung von nur einem ersten Sensor, besonders genaue Erfassung der ersten Kontur und insbesondere der Fehler der ersten Kontur der hergestellten ersten Verpackung. Die Modellierungseinheit kann die erste und zweite Bildaufnahme gemeinsam, vorzugsweise austomatisiert, verarbeiten, um die ersten Modellparameter der ersten Kontur zu bestimmen. Indem die ersten Modellparameter auf der ersten und zweiten Bildaufnahme basiert, kann eine Genauigkeit des ersten Modells der ersten Kontur verbessert werden.

Vorzugsweise beschreiben die ersten Modellparameter ein dreidimensionales erstes Modell der ersten Kontur, die zweiten Modellparameter ein dreidimensionales zweites Modell der zweiten Kontur und/oder die vorgegebenen Referenzparameter ein dreidimensionales Referenzmodell von einer Referenzkontur von einer Referenzverpackung. Dadurch ist es möglich, die erste, zweite und/oder Referenzkontur dreidimensional und optional besonders genau zu modellieren.

Vorzugsweise wird das Korrektursignal mit einem vorgegebenen Toleranzbereich verglichen. Dadurch kann die Zuverlässigkeit und optional Langlebigkeit des Verpackungskorrektursystems erhöht werden. Liegt das Korrektursignal in dem Toleranzbereich kann die Ausgabeeinheit das Korrektursignal an die Bearbeitungseinheit ausgeben. Dadurch kann sichergestellt werden, dass die Bearbeitungseinheit nicht aufgrund eines unzulässigen, d.h. außerhalb des Toleranzbereichs liegenden, Korrektursignals in einem unzulässigen Betriebsbereich betrieben wird.

Vorzugsweise wird eine Fehlermeldung ausgegeben, wenn das das Korrektursignal außerhalb des Toleranzbereichs liegt, insbesondere wobei das Korrektursignal nicht ausgegeben wird, wenn die Fehlermeldung ausgegeben wird. Dies kann die Zuverlässigkeit und optional Langlebigkeit des Verpackungskorrektursystems erhöhen. Dadurch kann sichergestellt werden, dass die Bearbeitungseinheit nicht aufgrund eines unzulässigen, d.h. außerhalb des Toleranzbereichs liegenden, Korrektursignals in einem unzulässigen Betriebsbereich betrieben wird. Durch die Fehlermeldung kann ein Bediener des Verpackungskorrektursystems oder der Verpackungsmaschine frühzeitig darauf hingewiesen werden, dass das Korrektursignal außerhalb des Toleranzbereichs liegt und gegebenenfalls manuell geeignete Maßnahmen, beispielsweise ein Stoppen der Verpackungsmaschine, ergreifen. Optional kann das Verpackungskorrektursystem beim Ausgeben der Fehlmeldung automatisch eine geeignete Maßnahme, beispielsweise ein Stoppen der Verpackungsmaschine, ergreifen. Die Fehlermeldung kann visuell und/oder akustisch von der Korrektursignaleinheit ausgegeben werden. Die Korrektursignaleinheit kann in eine Anzeigevorrichtung der Verpackungsmaschine integriert oder separat ausgebildet und mit dieser kommunikativ verbunden sein, um die Fehlermeldung über die Anzeigevorrichtung auszugeben.

Die von einem der Aspekte (Verpackungskorrektursystem, Verpackungsmaschine oder Verfahren) beschriebenen Merkmale oder Erläuterungen können einzeln oder in Kombination auf die anderen Aspekte übertragen und mit diesen kombiniert werden.

Im Folgenden wird die Erfindung anhand von beispielhaften Ausführungsformen erläutert. Es zeigen:
- Figur 1: eine schematische Seitenansicht einer Verpackungsmaschine gemäß einer Ausführungsform;
- Figur 2: eine schematische Ansicht des Verpackungskorrektursystems gemäß einer Ausführungsform;
- Figur 3: ein schematisches Flussdiagramm des Verfahrens zum automatisierten Ausgeben eines Korrektursignals an eine Bearbeitungseinheit der Verpackungsmaschine gemäß einer Ausführungsform;
- Figur 4: ein schematisches Flussdiagramm des Verfahrens zum automatisierten Ausgeben eines Korrektursignals an eine Bearbeitungseinheit der Verpackungsmaschine gemäß einer weiteren Ausführungsform;
- Figur 5: die erste Kontur der ersten Verpackung; und
- Figur 6: die zweite Kontur der zweiten Verpackung.

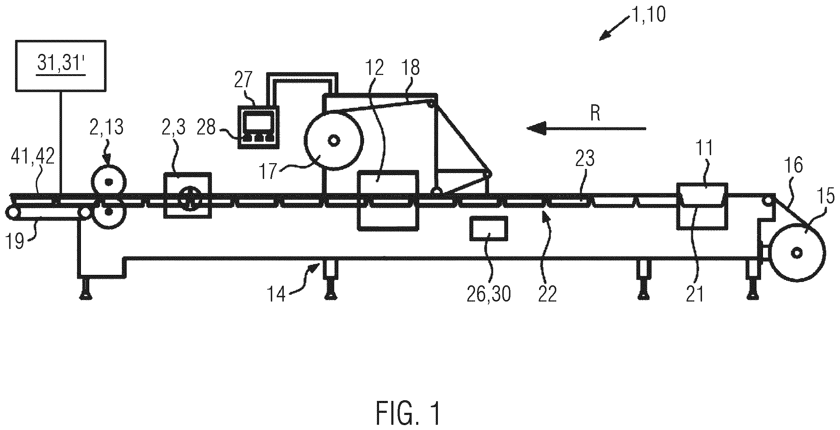

Figur 1 zeigt eine schematische Seitenansicht einer Verpackungsmaschine 1 gemäß einer Ausführungsform. Diese kann ist im vorliegenden Ausführungsbeispiel als eine Tiefziehverpackungsmaschine 10 ausgeführt. Die Tiefziehverpackungsmaschine 10 weist eine Formstation 11, eine Siegelstation 12 und eine Bearbeitungseinheit 2 auf, wobei die Bearbeitungseinheit 2 eine Stanzvorrichtung 3 und eine Schneidvorrichtung 13 umfasst. Die Formstation 11, die Siegelstation 12 und die Bearbeitungseinheit 2 sind in dieser Reihenfolge in einer Produktionsrichtung R an einem Maschinenrahmen 14 der Tiefziehverpackungsmaschine 10 angeordnet.

Eingangsseitig befindet sich an dem Maschinenrahmen 14 eine Zufuhrrolle 15, von der eine Folienbahn 16, insbesondere eine Verpackungsfolie, abgezogen wird. Im Bereich der Siegelstation 12 ist ein Materialspeicher 17 vorgesehen, von dem eine Deckelfolie 18 abgezogen wird. Ausgangsseitig ist an der Tiefziehverpackungsmaschine 10 eine Abfuhreinrichtung 19 in Form eines Transportbandes vorgesehen, mit der gesiegelte und vereinzelte Verpackungen 41, 42 abtransportiert werden. Ferner weist die Tiefziehverpackungsmaschine 10 eine nicht dargestellte Vorschubeinrichtung auf, die die Folienbahn 16 ergreift und diese pro Hauptarbeitstakt in der Produktionsrichtung R weitertransportiert. Die Vorschubeinrichtung kann zum Beispiel durch beidseitig angeordnete Klammerketten ausgeführt sein.

In der dargestellten Ausführungsform ist die Formstation 11 als eine Tiefziehstation ausgebildet, bei der in die Folienbahn 16 durch Tiefziehen Mulden 21 geformt werden. Dabei ist die Formstation 11 derart ausgebildet, dass in einer in eine Zeichenebene hineinzeigenden Richtung senkrecht zur Produktionsrichtung R mehrere Mulden 21 nebeneinander gebildet werden. Es werden jeweils in und quer zur Produktionsrichtung R vier zusammenhängende Mulden 21 gebildet. In Produktionsrichtung R hinter der Formstation 11 ist eine Einlegestrecke 22 vorgesehen, in der die in der Folienbahn 16 geformten Mulden 21 mit zumindest einem Produkt 23 befüllt werden. Es ist optional denkbar, dass anstelle einer Folienbahn 16 mit Mulden 21 eine zumindest nahezu flache Folienbahn 16 der Einlegestrecke 22 zum Befüllen zugeführt und mit der Deckelfolie 18 gesiegelt wird.

Die Stanzvorrichtung 3 durchtrennt die Folienbahn 16 und die Deckelfolie 18 in einer in die Zeichenebene hineinzeigenden Richtung quer zur Produktionsrichtung R zwischen benachbarten Mulden 21. Die Schneidvorrichtung 13 ist in der dargestellten Ausführungsform als eine Messeranordnung mit mehreren rotierenden Rundmessern ausgebildet, mit der die Folienbahn 16 und die Deckelfolie 18 zwischen benachbarten Mulden 21 und am seitlichen Rand der Folienbahn 16 durchtrennt werden. Hinter der Schneidvorrichtung 13 liegen insgesamt 16 vereinzelte gesiegelte Verpackungen 41, 42 vor.

Die Tiefziehverpackungsmaschine 10 verfügt ferner über eine Steuerung 26. Sie hat die Aufgabe, die in der Tiefziehverpackungsmaschine 10 ablaufenden Prozesse zu steuern und zu überwachen. Eine Anzeigevorrichtung 27 mit Bedienelementen 28 dient zum Visualisieren bzw. manuellen Beeinflussen der Prozessabläufe in der Tiefziehverpackungsmaschine 10 für bzw. durch einen Bediener.

Die Tiefziehverpackungsmaschine 10 umfasst ferner ein Verpackungskorrektursystem 30. Einzelne Einheiten des Verpackungskorrektursystems 30, insbesondere eine Modellierungseinheit 32, eine Vergleichseinheit 33, eine Speichereinheit 33', eine Korrektursignaleinheit 34 und eine Ausgabeeinheit 35, sind in die Steuerung 26 integriert. Optional kann das Verpackungskorrektursystem 30 separat ausgeführt und mit der Steuerung 26 der Tiefziehverpackungsmaschine 10 kommunikativ verbunden sein.

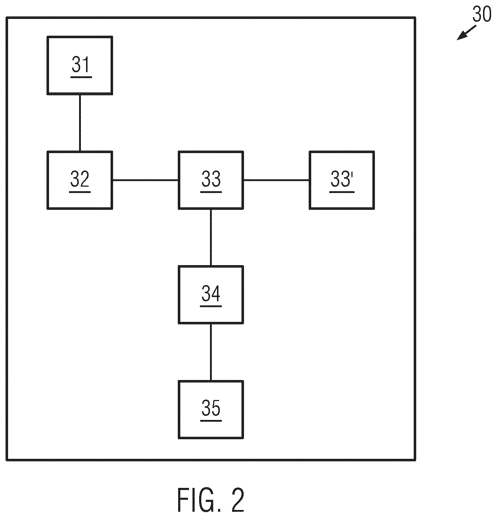

Anhand der Figuren 2 bis 4 werden das Verpackungskorrektursystem 30 und dessen Funktion näher erläutert.

Figur 2 zeigt eine schematische Ansicht des Verpackungskorrektursystems 30 gemäß einer Ausführungsform. Das Verpackungskorrektursystem 30 umfasst einen ersten Sensor 31, eine Modellierungseinheit 32, eine Vergleichseinheit 33, eine Korrektursignaleinheit 34 und eine Ausgabeeinheit 35. Diese Einheiten sind drahtlos miteinander kommunikativ verbunden. Optional können diese mit einem Kabel kommunikativ verbunden sein.

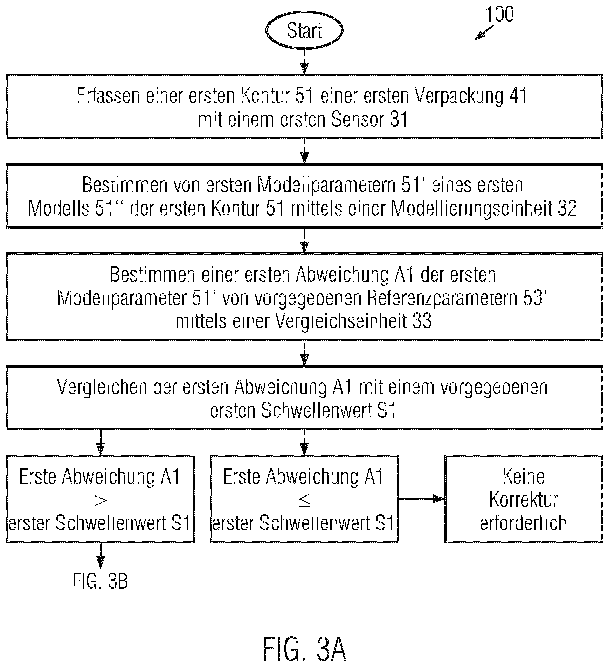

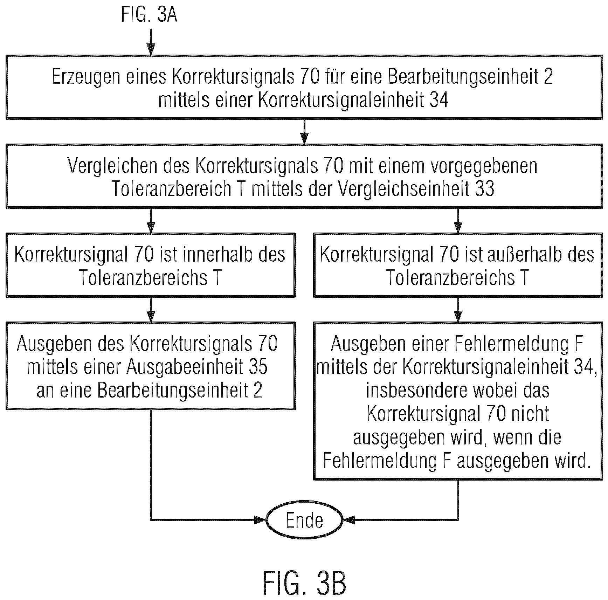

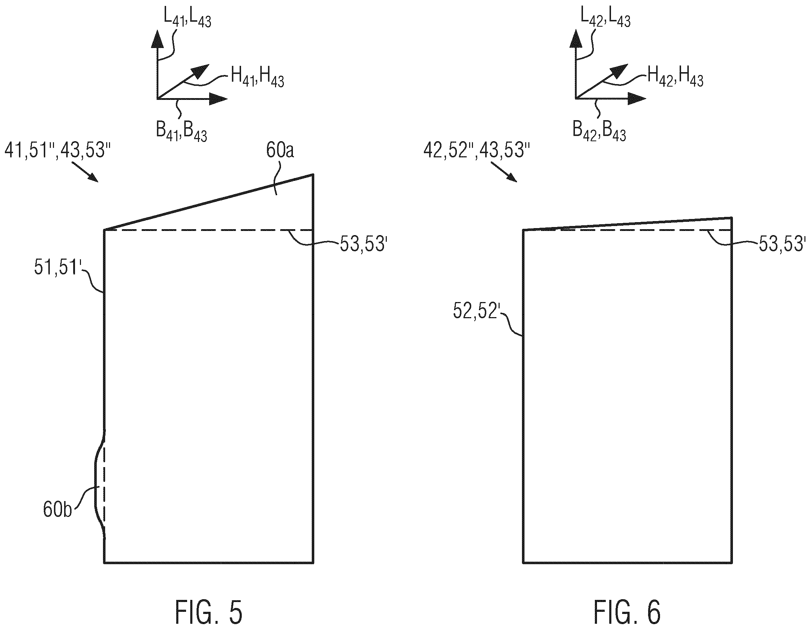

Figur 3, die sich aus den Figuren 3A und 3B zusammensetzt, zeigt ein schematisches Flussdiagramm des Verfahrens 100 zum automatisierten Ausgeben eines Korrektursignals 70 an de Bearbeitungseinheit 2 der Verpackungsmaschine 1 mit dem Verpackungskorrektursystem 30 gemäß einer Ausführungsform. Obwohl die Tiefziehverpackungsmaschine 10 sechzehn vereinzelte gesiegelte Verpackungen 41, 42 erzeugt, beschränken sich die folgenden Ausführungen zur besseren Verständlichkeit auf nur eine einzelne erste Verpackung 41 (siehe Figur 5). Diese Korrektur ist jedoch in identischer Weise auf alle ersten Verpackungen 41 übertragbar.

Das Verfahren 100 umfasst die folgenden Schritte, die beispielsweise in der nachfolgend beschriebenen Reihenfolge durchgeführt werden können.

In einem ersten Schritt wird eine erste Kontur 51 von zumindest einer ersten Verpackung 41 mittels des ersten Sensors 31 erfasst. Der erste Sensor 31 ist im vorliegenden Ausführungsbeispiel eine 2D-Kamera. Optional kann der erste Sensor 31 ein Ultraschallsensor, ein kapazitiver Sensor oder ein optischer Sensor, zum Beispiel eine 1D-, 2D- oder 3D-Kamera oder eine Lichtschranke, sein. Die erste Kontur 51 wird durch eine von der Bearbeitungseinheit 2, insbesondere der Schneidvorrichtung 13 und Stanzvorrichtung 3, vorbestimmte Verpackungslänge L₄₁, Verpackungsbreite B₄₁ und Verpackungshöhe H₄₁ gebildet. Der erste Sensor 31 ist parallel zur ersten Kontur 51 an dem Maschinenrahmen 14 angeordnet, um eine erste Bildaufnahme 31' der ersten Kontur 51 der ersten Verpackung 41 zu machen (siehe Figur 1). Die erste Bildaufnahme 31` ist parallel zu einer Oberseite der ersten Verpackung 41, insbesondere einer ersten Ebene, die von der Verpackungslänge L₄₁, und -breite B₄₁ aufgespannt wird. Mit anderen Worten erfasst die erste Bildaufnahme 31' die Oberseite der ersten Verpackung 41 (siehe Figur 5). Optional kann die erste Bildaufnahme 31' parallel zu einer Längsseite der ersten Verpackung 41 sein, insbesondere einer zweiten Ebene, die von der Verpackungslänge L₄₁, und -höhe H₄₁ oder parallel zu einer Querseite der ersten Verpackung 41, insbesondere einer dritten Ebene, die von der Verpackungsbreite B₄₁, und -höhe H₄₁ aufgespannt wird. Optional kann die erste Bildaufnahme 31' winklig zu der ersten, zweiten oder dritten Ebene sein. Anhand der ersten Bildaufnahme 31' können Fehler 60a, 60b an zumindest einem Bereich der ersten Kontur 51 der hergestellten ersten Verpackung 41 erfasst werden.

Optional kann ein nicht dargestellter zweiter Sensor 61 vorgesehen sein, wobei der erste Sensor 31 und der zweite Sensor 62 in einem Winkel zueinander angeordnet sein können. Dies ermöglicht eine, insbesondere in Hinblick auf die Verwendung von einem ersten Sensor 31, besonders genaue Erfassung der ersten Kontur 51 und insbesondere der Fehler 60a, 60b der ersten Kontur 51.

Im vorliegenden Ausführungsbeispiel weist die hergestellte erste Verpackung 41 bzw. deren erste Kontur 51 im Vergleich zu einer Referenzverpackung 43 bzw. deren Referenzkontur 53 die Fehler 60a, 60b auf (siehe Figur 5). Der erste Fehler 60a besteht in einer schiefen Kante und der zweite Fehler 60b in einem überschüssigen Folienrest entlang der Verpackungslänge L₄₁ der ersten Verpackung 41. Diese Fehler 60a, 60b verschlechtern die Qualität und Ästhetik der hergestellten ersten Verpackung 41. Die erste Bildaufnahme 31' stellt diese Fehler 60a, 60b der der ersten Kontur 51 der hergestellten ersten Verpackung 41 im Vergleich zu der Referenzkontur 53 der Referenzverpackung 43 dar.

Die erste Bildaufnahme 31' bzw. die erfasste erste Kontur 51 wird an die Modellierungseinheit 32 weitergeleitet.

Im nächsten Schritt werden basierend auf der erfassten ersten Kontur 51 erste Modellparametern 51' eines ersten Modells 51" der ersten Kontur 51 mittels der Modellierungseinheit 32 bestimmt. Die ersten Modellparameter 51` beschreiben ein zweidimensionales erstes Modell 51" der ersten Kontur 51. Indem ein zweidimensionales erstes Modell 51" der ersten Kontur 51 erstellt wird, ist ein erster Sensor 31, insbesondere eine 2D-Kamera, ausreichend, um die erste Bildaufnahme 31' der ersten Kontur 51 zu machen. Dies hat den Vorteil, dass, insbesondere im Vergleich zu einer 3D-Modellierung, ein Aufwand für die Modellierung reduziert wird.

Die ersten Modellparameter 51' werden an die Vergleichseinheit 33 weitergeleitet.

Im nächsten Schritt wird eine erste Abweichung A₁ der ersten Modellparameter 51' von vorgegebenen Referenzparametern 53' mittels der Vergleichseinheit 33 bestimmt. Da die erste Kontur 51 zwei Fehler 60a, 60b aufweist, umfasst die erste Abweichung A₁ zwei erste Teilabweichungen A₁₁, A₁₂. Die ersten Teilabweichungen A₁₁, A₁₂ geben jeweils an, wie stark sich der jeweilige fehlerhafte Bereich der ersten Kontur 51, der durch die ersten Modellparameter 51` dargestellt wird, von der durch die Referenzparameter 53' dargestellten Referenzkontur 53 unterscheidet. Beispielsweise gibt die erste Abweichung A₁ bzw. die ersten Teilabweichungen A₁₁, A₁₂ an, wie stark zumindest eine Kante der ersten Kontur 51 oder mehrere Bereiche davon in Bezug auf die Referenzkontur 53 in axialer Richtung versetzt und/oder wie stark die zumindest eine Kante der ersten Kontur 51 in Bezug auf die Referenzkontur 53 in Rotationsrichtung verdreht ist.

Die Vergleichseinheit 33 greift im vorliegenden Fall auf eine von der Vergleichseinheit 33 extern ausgebildete Speichereinheit 33' zu (siehe Figur 2), auf der die vorgegebenen Referenzparameter 53' gespeichert sind. Optional kann die Vergleichseinheit 33 die Speichereinheit 33' umfassen. Die Referenzparameter 53' beschreiben eine Referenzverpackungslänge L₄₃, -breite B₄₃, und -höhe H₄₃, die eine Referenzkontur 53 der Referenzverpackung 43 bilden. Die Referenzkontur 53 beschreibt eine ideale Kontur der herzustellenden Verpackung. Die Referenzparameter 53' beschreiben ein zweidimensionales Modell 53" der Referenzkontur 53. Im vorliegenden Ausführungsbeispiel bestimmt die Vergleichseinheit 33 eine erste Teilabweichung A₁₁, die sich auf den Fehler 60a bezieht, von zwanzig Grad (schiefe Kante), und eine erste Teilabweichung A₁₂, die sich auf den Fehler 60b bezieht, von sechs Millimeter (überschüssiger Folienrest).

Die Vergleichseinheit 33 vergleicht die erste Abweichung A₁, d.h. im vorliegenden Fall je die ersten Teilabweichungen A₁₁, A₁₂, mit einem vorgegebenen ersten Schwellenwert S₁. Der erste Schwellenwert S₁ gibt an, wie stark sich die ersten Modellparameter 51' von den Referenzparametern 53' höchstens unterscheiden dürfen, damit die hergestellte erste Kontur 51 den Qualitätsanforderungen entspricht und keine Korrektur, d.h. kein Korrektursignal 70 für die Bearbeitungseinheit 2, erforderlich ist.

Der erste Schwellenwert S₁ gibt im vorliegenden Ausführungsbeispiel an, dass zumindest eine Kante der ersten Kontur 51 oder mehrere Bereiche davon in Bezug auf die Referenzkontur 53 höchstens um etwa vier Millimeter in axialer Richtung versetzt und/oder höchstens um etwa 2,5 Grad in Rotationsrichtung verdreht sein darf. Der erste Schwellenwert S₁ kann beliebig gewählt sein. Der erste Schwellenwert S₁ kann optional angeben, dass zumindest eine Kante der ersten Kontur 51 oder mehrere Bereiche davon in Bezug auf die Referenzkontur 53 höchstens um etwa fünf Millimeter, vorzugsweise um höchstens etwa drei Millimeter, in axialer Richtung versetzt sein darf. Optional oder zusätzlich kann der erste Schwellenwert angeben, dass die zumindest eine Kante der ersten Kontur 51 in Bezug auf die Referenzkontur 53 höchstens um etwa drei Grad, vorzugsweise um höchstens zwei Grad, in Rotationsrichtung verdreht sein darf. Dadurch kann bestimmt werden, ob die erste Kontur 51 Fehler, wie beispielsweise schiefe, unsaubere (überschüssige Folienreste), falsch platzierte und/oder falsch orientierte Kanten aufweist.

Die ersten Modellparameter 51' sind im vorliegenden Fall hinreichend gut gewählt, wenn die erste Abweichung A_{1,} d.h. im vorliegenden Fall je die ersten Teilabweichungen A₁₁, A₁₂, kleiner als der erste Schwellenwert S₁ oder gleich dem ersten Schwellenwert S₁ sind. Die Vergleichseinheit 33 bestimmt, da die erste Abweichung A₁ größer als der erste Schwellenwert S₁ ist, dass die hergestellte erste Kontur 51 nicht den Qualitätsanforderungen entspricht, d.h. dass sie zu stark von der Referenzkontur 53 abweicht und eine Korrektur erforderlich ist.

Die erste Abweichung A₁ wird an die Korrektursignaleinheit 34 weitergeleitet.

Im nächsten Schritt wird das Korrektursignal 70 für die Bearbeitungseinheit mittels der Korrektursignaleinheit 34 erzeugt. Das Korrektursignal 70 wird so bestimmt, dass die von der Bearbeitungseinheit 2 zu erzeugende zweite Kontur 52 der zweiten Verpackung 42 (zumindest annähernd) der Referenzkontur 53 entspricht. Im vorliegenden Ausführungsbeispiel werden eine Position der Stanzvorrichtung 3 sowie eine Geschwindigkeit und ein Druck der Schneidvorrichtung 13, insbesondere in Bezug auf die zu fertigende zweite Verpackung 42, verändert, um die Fehler 60a, 60b zu korrigieren.

Im nächsten Schritt wird das Korrektursignal 70 mittels der Vergleichseinheit 33 mit einem vorgegebenen Toleranzbereich T verglichen. Der Toleranzbereich T beträgt im vorliegenden Ausführungsbeispiel mindestens etwa 15% und höchstens etwa 97 % einer Obergrenze eines zulässigen Betriebsbereichs der Bearbeitungseinheit 2. Optional kann der Toleranzbereich T beispielsweise mindestens etwa 10% und/oder höchstens etwa 98 %, vorzugsweise höchstens etwa 95 %, betragen. Im vorliegenden Ausführungsbeispiel beträgt das Korrektursignal 70 etwa 80 % der Obergrenze des zulässigen Betriebsbereichs der Bearbeitungseinheit 2. Da das Korrektursignal 70 damit innerhalb des Toleranzbereichs T liegt, wird das Korrektursignal 70 an die Ausgabeeinheit 35 weitergeleitet. Durch den Vergleich des Korrektursignal 70 mit dem Toleranzbereich T wird sichergestellt, dass die Bearbeitungseinheit 2 nicht aufgrund eines unzulässigen, d.h. außerhalb des Toleranzbereichs T liegenden, Korrektursignals 70 in einem unzulässigen Betriebsbereich betrieben wird. Dadurch werden die Zuverlässigkeit und optional die Langlebigkeit des Verpackungskorrektursystems 30 erhöht.

Im nächsten Schritt wird das Korrektursignal 70 mittels der Ausgabeeinheit 35 an die Bearbeitungseinheit 2 ausgegeben. Die Bearbeitungseinheit 2 wird basierend auf dem Korrektursignal 70 automatisch oder optional manuell gesteuert, um die zweite Verpackung 42, insbesondere deren zweite Kontur 52, herzustellen. Die Ausgabeeinheit 35 leitet im vorliegenden Fall das Korrektursignal 70 direkt an eine Aktorik der Bearbeitungseinheit 2, insbesondere deren Antrieb, weiter. Optional kann die Ausgabeeinheit 35 das Korrektursignal 70 an eine Steuerung der Bearbeitungseinheit 2 ausgeben, die mit der Aktorik der Bearbeitungseinheit 2 kommunikativ verbunden ist.

Als Ergebnis dieses Korrekturvorgangs fertigt die Tiefziehverpackungsmaschine 10 die zweite Verpackung 42, deren zweite Kontur 52, wie aus Figur 6 ersichtlich, hinreichend gut der Referenzkontur 53 entspricht.

Figur 3 zeigt ferner den Ablauf des Verfahrens 100, wenn beim Vergleichen des Korrektursignals 70 mittels der Vergleichseinheit 33 mit dem vorgegebenen Toleranzbereich T bestimmt wird, dass das Korrektursignal 70 außerhalb des Toleranzbereichs T liegt. Beispielsweise beträgt das Korrektursignal 70 etwa 102 % der Obergrenze des zulässigen Betriebsbereichs der Bearbeitungseinheit 2. Da das Korrektursignal 70 damit außerhalb des Toleranzbereichs T liegt, gibt die Korrektursignaleinheit 34 eine Fehlermeldung F aus. Das Korrektursignal 70 wird nicht an die Ausgabeeinheit 35 weitergeleitet und nicht von dieser ausgegeben.

Durch die Fehlermeldung F wird ein Bediener des Verpackungskorrektursystems 30 oder der Tiefziehverpackungsmaschine 10 frühzeitig darauf hingewiesen, dass das Korrektursignal 70 außerhalb des Toleranzbereichs T liegt. Der Bediener kann das Korrektursignal 70 überprüfen und gegebenenfalls geeignete Maßnahmen, beispielsweise ein Stoppen der Tiefziehverpackungsmaschine 10, ergreifen. Optional kann das Verpackungskorrektursystem 30 beim Ausgeben der Fehlmeldung F automatisch eine geeignete Maßnahme ergreifen.

Die Fehlermeldung F wird im vorliegenden Fall visuell oder optional akustisch von der Korrektursignaleinheit 34 ausgegeben. Dazu ist die Korrektursignaleinheit 34 kommunikativ mit der Anzeigevorrichtung 27 der Tiefziehverpackungsmaschine 10 verbunden. Es wird sichergestellt, dass die Bearbeitungseinheit 2 nicht aufgrund eines unzulässigen, d.h. außerhalb des Toleranzbereichs T liegenden, Korrektursignals 70 in einem unzulässigen Betriebsbereich betrieben wird. Dadurch werden die Zuverlässigkeit und optional die Langlebigkeit des Verpackungskorrektursystems erhöht.

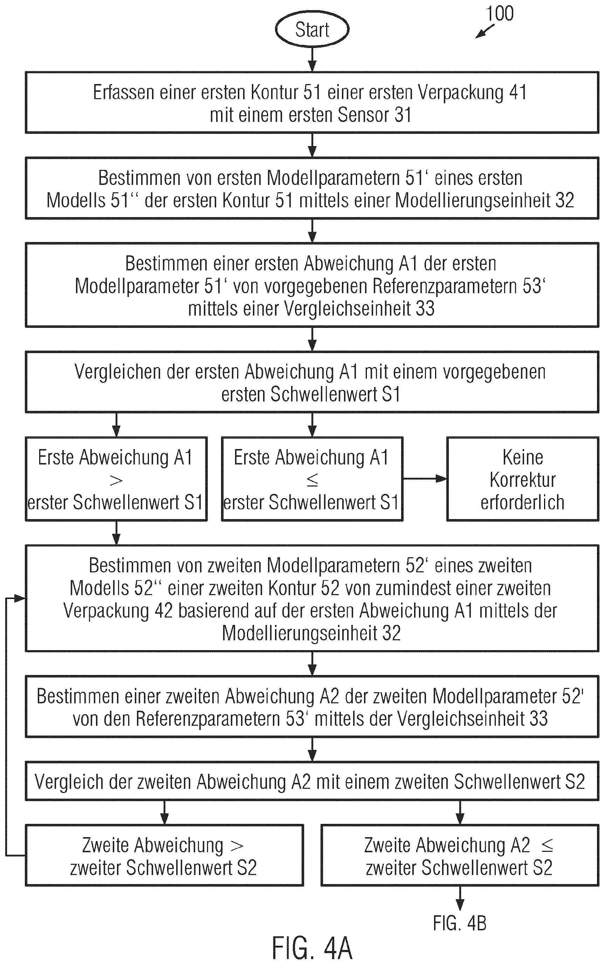

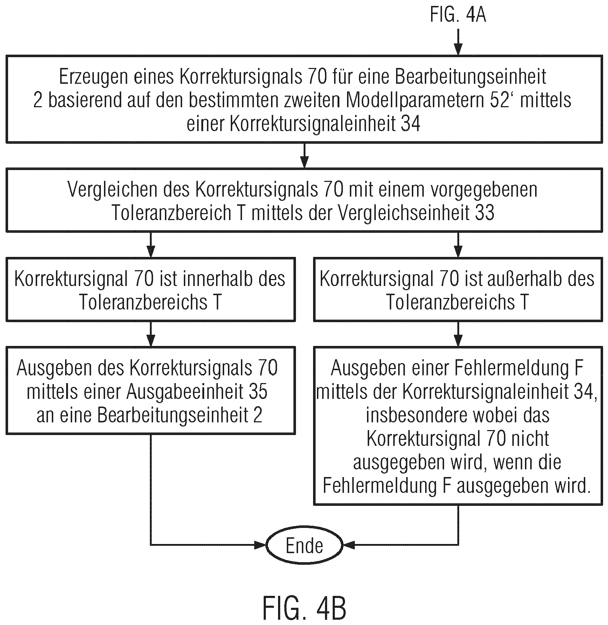

Figur 4, die sich aus den Figuren 4A und 4B zusammensetzt, zeigt ein schematisches Flussdiagramm des Verfahrens 100 zum automatisierten Ausgeben eines Korrektursignals 70 an die Bearbeitungseinheit 2 der Verpackungsmaschine 1 mit dem Verpackungskorrektursystem 30 gemäß einer weiteren Ausführungsform. Dabei werden zunächst die Schritte der Erfassung der ersten Kontur 51 der zumindest einen ersten Verpackung 41 mit dem ersten Sensor 31, der Bestimmung der ersten Modellparameter 51', der Bestimmung der ersten Abweichung A₁ umfassen die ersten Teilabweichungen A₁₁, A₁₂ und des Vergleichs der ersten Abweichung A₁ mit dem ersten Schwellenwert S₁ gemäß dem Verfahren 100 aus Figur 3 durchgeführt. Wie bei dem Verfahren 100 aus Figur 3 bestimmt die Vergleichseinheit 33, dass die erste Abweichung A₁ größer als der erste Schwellenwert S₁ und daher eine Korrektur erforderlich ist.

Anders als bei dem in Figur 3 dargestellten Verfahren 100 wird gemäß dem Verfahren 100 in Figur 4 die erste Abweichung A₁ an die Modellierungseinheit 32 weitergeleitet. Es werden zweite Modellparameter 52' eines zweiten Modells 52" einer zweiten Kontur 52 von zumindest einer zweiten Verpackung 42 basierend auf der ersten Abweichung A₁ mittels der Modellierungseinheit 32 bestimmt. Die zweiten Modellparameter 52` beschreiben ein zweidimensionales Modell 52" der zweiten Kontur 52. Die zweiten Modellparameter 52` werden derart gewählt, dass die zweite Kontur 52 im Vergleich zu der ersten Kontur 51 weniger stark von der Referenzkontur 53 abweicht (siehe Figur 6).

Die zweiten Modellparameter 52` werden an die Vergleichseinheit 33 weitergeleitet.

Im nächsten Schritt wird eine zweite Abweichung A₂ der zweiten Modellparameter 52` von den Referenzparametern 53' mittels der Vergleichseinheit 33 bestimmt. Die zweite Abweichung A₂ gibt an, wie stark sich die zweite Kontur 52 von der Referenzkontur 53 unterscheidet. Die zweite Abweichung A₂ umfasst im vorliegenden Ausführungsbeispiel zwei zweite Teilabweichungen A₂₁, A₂₂, die angeben, wie stark sich der jeweilige fehlerhafte Bereich der zweiten Kontur 52, der durch die zweiten Modellparameter 52` dargestellt wird, von der durch die Referenzparameter 53' dargestellten Referenzkontur 53 unterscheidet. Mit anderen Worten geben die zweite Abweichung A₂ bzw. die zweiten Teilabweichungen A₂₁, A₂₂ an, wie gut die zweiten Modellparameter 52` gewählt sind, damit die zweite Kontur 52 (zumindest annähernd) der Referenzkontur 53 entspricht. Beispielsweise geben die zweite Abweichung A₂ bzw. die zweiten Teilabweichungen A₂₁, A₂₂ an, wie stark zumindest eine Kante der zweiten Kontur 52 oder mehrere Bereiche davon in Bezug auf die Referenzkontur 53 in axialer Richtung versetzt und/oder wie stark die zumindest eine Kante der zweiten Kontur 52 in Bezug auf die Referenzkontur 53 in Rotationsrichtung verdreht ist. Im vorliegenden Ausführungsbeispiel bestimmt die Vergleichseinheit 33 eine zweite Teilabweichung A₂₁, die sich auf den Fehler 60a bezieht, von 1,5 Grad (schiefe Kante), und eine zweite Teilabweichung A₂₂, die sich auf den Fehler 60b bezieht, von etwa einem Millimeter (überschüssiger Folienrest).

Die Vergleichseinheit 33 vergleicht die zweite Abweichung A₂ bzw. die zweiten Teilabweichungen A₂₁, A₂₂ mit dem vorgegebenen zweiten Schwellenwert S₂. Der zweite Schwellenwert S₂ gibt an, wie stark sich die zweiten Modellparameter 52` von den Referenzparametern 53` höchstens unterscheiden dürfen, damit die herzustellende zweite Kontur 52 den Qualitätsanforderungen entspricht und keine Korrektur, d.h. kein Korrektursignal 70 für die Bearbeitungseinheit 2, erforderlich ist. Der zweite Schwellenwert S₂ kann beliebig gewählt sein. Im vorliegenden Ausführungsbeispiel entspricht der zweite Schwellenwert S₂ dem ersten Schwellenwert S₁. Die zweiten Modellparameter 52` sind hinreichend gut gewählt, d.h. die zweite Kontur 52 ist hinreichend gut herstellbar, und es ist keine Korrektur, d.h. kein Korrektursignal 70 für die Bearbeitungseinheit 2, erforderlich, wenn die zweite Abweichung A₂ bzw. die zweiten Teilabweichungen A₂₁, A₂₂ kleiner als der zweite Schwellenwert S₂ oder gleich dem zweiten Schwellenwert S₂ sind. Sind die zweite Abweichung A₂ bzw. die zweiten Teilabweichungen A₂₁, A₂₂ größer als der zweite Schwellenwert S₂, bestimmt die Vergleichseinheit 33, dass die herzustellende zweite Kontur 52 nicht den Qualitätsanforderungen entspricht, d.h. dass sie zu stark von der Referenzkontur 53 abweicht und eine Korrektur erforderlich ist. Die Vergleichseinheit 33 bestimmt, dass die zweite Abweichung A₂ bzw. die zweiten Teilabweichungen A₂₁, A₂₂ je kleiner als der zweite Schwellenwert S₂ sind. Somit entspricht die mittels der zweiten Modellparameter 52` modellierte zweite Kontur 52 den Qualitätsanforderungen.

Die zweite Abweichung A₂ bzw. die zweiten Teilabweichungen A₂₁, A₂₂ werden an die Korrektursignaleinheit 34 weitergeleitet.

Im nächsten Schritt wird das Korrektursignal 70 für die Bearbeitungseinheit 2 basierend auf den bestimmten zweiten Modellparametern 52` mittels einer Korrektursignaleinheit 34 erzeugt, da die zweite Abweichung A₂ bzw. die zweiten Teilabweichungen A₂₁, A₂₂ kleiner als der zweite Schwellenwert S₂ sind. In dem anderen Fall, dass die zweite Abweichung A₂ größer als der zweite Schwellenwert S₂ ist, erzeugt die Korrektursignaleinheit 34 kein Korrektursignal 70. Bis zur Erzeugung des Korrektursignals 70 kann es daher erforderlich sein, dass das Verpackungskorrektursystem 30 die Schritte der Bestimmung der zweiten Modellparameter 52a', der Bestimmung der zweiten Abweichung A₂ bzw. der zweiten Teilabweichungen A₂₁, A₂₂ und des Vergleichs der zweiten Abweichung A₂ bzw. der zweiten Teilabweichungen A₂₁, A₂₂ mit dem zweiten Schwellenwert S₂ iterativ durchgeführt werden. Diese Schritte können insbesondere so oft wiederholt werden, bis die zweite Abweichung A₂ bzw. die zweiten Teilabweichungen A₂₁, A₂₂ kleiner als der zweite Schwellenwert S₂ oder gleich dem zweiten Schwellenwert S₂ sind. Dies kann ein einfaches und besonders genaues Herstellen von zweiten Verpackungen 42 ermöglichen. Wie im Verfahren 100 aus Figur 3 wird das Korrektursignal 70 so bestimmt, dass die von der Bearbeitungseinheit 2 zu erzeugende zweite Kontur 52 der zweiten Verpackung 42 (zumindest annähernd) der Referenzkontur 53 der Referenzverpackung 43 entspricht.

Die nächsten Schritte des Verfahrens 100 aus Figur 4 entsprechen denen des Verfahrens 100 aus Figur 3, also dem Vergleich des Korrektursignals 70 mit dem Toleranzbereich T und der Ausgabe des Korrektursignals 70 an die Bearbeitungseinheit 2, um die zweite Verpackung 42 zu fertigen.

## Patentansprüche

1. Verpackungskorrektursystem (30) für eine Verpackungsmaschine (1) zum automatisierten Ausgeben eines Korrektursignals (70) an eine Bearbeitungseinheit (2) der Verpackungsmaschine (1), wobei das Verpackungskorrektursystem (30) umfasst:
zumindest einen ersten Sensor (31) zum Erfassen von einer ersten Kontur (51) von zumindest einer ersten Verpackung (41),
eine Modellierungseinheit (32) zum Bestimmen von ersten Modellparametern (51') eines ersten Modells (51") der ersten Kontur (51),
eine Vergleichseinheit (33) zum Bestimmen einer ersten Abweichung (A₁) der ersten Modellparameter (51') von vorgegebenen Referenzparametern (53'),
eine Korrektursignaleinheit (34) zum Erzeugen des Korrektursignals (70) für die Bearbeitungseinheit (2), und
eine Ausgabeeinheit (35) zum Ausgeben des Korrektursignals (70) an die Bearbeitungseinheit (2).

2. Verpackungskorrektursystem nach Anspruch 1,
**dadurch gekennzeichnet, dass**
die Modellierungseinheit (32) zum Bestimmen von zweiten Modellparametern (52') eines zweiten Modells (52") einer zweiten Kontur (52) von zumindest einer zweiten Verpackung (42) basierend auf der ersten Abweichung (A₁) ausgebildet ist,
wobei die Vergleichseinheit (33) zum Bestimmen einer zweiten Abweichung (A₂) der zweiten Modellparameter (52') von den Referenzparametern (53`) ausgebildet ist, und
wobei die Korrektursignaleinheit (34) zum Erzeugen des Korrektursignals (70) für die Bearbeitungseinheit (2) der Verpackungsmaschine (1) basierend auf den bestimmten zweiten Modellparametern (52') ausgebildet ist, wenn die zweite Abweichung (A₂) kleiner als ein vorgegebener zweiter Schwellenwert (S₂) oder gleich einem vorgegebenen zweiten Schwellenwert (S₂) ist.

3. Verpackungskorrektursystem nach Anspruch 1 oder 2,
**dadurch gekennzeichnet, dass**
die ersten Modellparameter (51') ein zweidimensionales erstes Modell (51") der ersten Kontur (51), die zweiten Modellparameter (52') ein zweidimensionales zweites Modell (52") der zweiten Kontur (52) und/oder die vorgegebenen Referenzparameter (53') ein zweidimensionales Referenzmodell (53") von einer Referenzkontur (53) von einer Referenzverpackung (43) beschreiben.

4. Verpackungskorrektursystem nach einem der vorangehenden Ansprüche,
**gekennzeichnet durch**
zumindest einen zweiten Sensor (61), wobei der erste Sensor (31) und der zweite Sensor (61) in einem Winkel zueinander angeordnet sind.

5. Verpackungskorrektursystem nach einem der vorangehenden Ansprüche,
**dadurch gekennzeichnet, dass**
die ersten Modellparameter (51 `) ein dreidimensionales erstes Modell (51") der ersten Kontur (51), die zweiten Modellparameter (52') ein dreidimensionales zweites Modell (52") der zweiten Kontur (52) und/oder die vorgegebenen Referenzparameter (53') ein dreidimensionales Referenzmodell (53") von einer Referenzkontur (53) von einer Referenzverpackung (43) beschreiben.

6. Verpackungskorrektursystem nach einem der vorangehenden Ansprüche,
**dadurch gekennzeichnet, dass**
die Vergleichseinheit (33) zum Vergleichen des Korrektursignals (70) mit einem vorgegebenen Toleranzbereich (T) ausgebildet ist.

7. Verpackungskorrektursystem nach Anspruch 6,
**dadurch gekennzeichnet, dass**
die Korrektursignaleinheit (34) zum Ausgeben einer Fehlermeldung (F) ausgebildet ist, wenn das Korrektursignal (70) außerhalb des Toleranzbereichs (T) liegt, insbesondere wobei die Ausgabeeinheit (35) dazu ausgebildet ist, das Korrektursignal (70) nicht auszugeben, wenn die Fehlermeldung (F) ausgegeben wird.

8. Verpackungsmaschine (1), insbesondere Tiefziehverpackungsmaschine (10), umfassend:
eine Bearbeitungseinheit (2) zum Erstellen von einer ersten Kontur (51) von zumindest einer ersten Verpackung (41) und
ein Verpackungskorrektursystem (30) zum automatisierten Ausgeben eines Korrektursignals (70) an die Bearbeitungseinheit (2) nach einem der Ansprüche 1 bis 7,
wobei die Bearbeitungseinheit (2) eine Schneidvorrichtung (13) und/oder Stanzvorrichtung (3) umfasst, und
wobei das Verpackungskorrektursystem (30) zum Ausgeben des Korrektursignals (70) an die Bearbeitungseinheit (2) zum Erstellen von einer zweiten Kontur (52) von zumindest einer zweiten Verpackung (42) ausgebildet ist.

9. Verfahren (100) zum automatisierten Ausgeben eines Korrektursignals (70) an eine Bearbeitungseinheit (2), insbesondere einer Verpackungsmaschine (1), das die folgenden Schritte umfasst:
Erfassen von einer ersten Kontur (51) von zumindest einer ersten Verpackung (41) mittels zumindest eines ersten Sensors (31),
Bestimmen von ersten Modellparametern (51') der ersten Kontur (51) eines ersten Modells (51") mittels einer Modellierungseinheit (32),
Bestimmen einer ersten Abweichung (A₁) der ersten Modellparameter (51') von vorgegebenen Referenzparametern (53') mittels einer Vergleichseinheit (33),
Erzeugen des Korrektursignals (70) für die Bearbeitungseinheit (2) mittels einer Korrektursignaleinheit (34), und
Ausgeben des Korrektursignals (70) mittels einer Ausgabeeinheit (35) an die Bearbeitungseinheit (2).

10. Verfahren nach Anspruch 9,
**gekennzeichnet durch**
Bestimmen von zweiten Modellparametern (52') eines zweiten Modells (52") einer zweiten Kontur (52) von zumindest einer zweiten Verpackung (42) basierend auf der ersten Abweichung (A₁) mittels der Modellierungseinheit (32),
Bestimmen einer zweiten Abweichung (A₂) der zweiten Modellparameter (52') von den Referenzparametern (53') mittels der Vergleichseinheit (33), und
Erzeugen des Korrektursignals (70) für die Bearbeitungseinheit (2) basierend auf den bestimmten zweiten Modellparametern (52') mittels der Korrektursignaleinheit (34), wenn die zweite Abweichung (A₂) kleiner als ein vorgegebener zweiter Schwellenwert (S₂) oder gleich einem vorgegebenen zweiten Schwellenwert (S₂) ist.

11. Verfahren nach Anspruch 9 oder 10,
**dadurch gekennzeichnet, dass**
die ersten Modellparameter (51') ein zweidimensionales erstes Modell (51") der ersten Kontur (51), die zweiten Modellparameter (52') ein zweidimensionales zweites Modell (52") der zweiten Kontur (52) und/oder die vorgegebenen Referenzparameter (53') ein zweidimensionales Referenzmodell (53") von einer Referenzkontur (53) von einer Referenzverpackung (43) beschreiben.

12. Verfahren nach einem der Ansprüche 9 bis 11,
**gekennzeichnet durch**
zumindest einen zweiten Sensor (61), wobei der erste Sensor (31) und der zweite Sensor (61) in einem Winkel zueinander angeordnet sind.

13. Verfahren nach einem der Ansprüche 9 bis 12,
**dadurch gekennzeichnet, dass**
die ersten Modellparameter (51') ein dreidimensionales erstes Modell (51") der ersten Kontur (51), die zweiten Modellparameter (52') ein dreidimensionales zweites Modell (52") der zweiten Kontur (52) und/oder die vorgegebenen Referenzparameter (53') ein dreidimensionales Referenzmodell (53") von einer Referenzkontur (53) von einer Referenzverpackung (43) beschreiben.

14. Verfahren nach einem der Ansprüche 9 bis 13,
**dadurch gekennzeichnet, dass**
das Korrektursignal (70) mit einem vorgegebenen Toleranzbereich (T) verglichen wird.

15. Verfahren nach Anspruch 14,
**dadurch gekennzeichnet, dass**
eine Fehlermeldung (F) ausgegeben wird, wenn das Korrektursignal (70) außerhalb des Toleranzbereichs (T) liegt, insbesondere wobei das Korrektursignal (70) nicht ausgegeben wird, wenn die Fehlermeldung (F) ausgegeben wird.
